# EUROPÄISCHE PATENTSCHRIFT

(11) **EP 1 041 044 B1**
(45) Veröffentlichungstag und Bekanntmachung des Hinweises auf die Patenterteilung: **24.07.2002**
(21) Anmeldenummer: 99250098.3
(22) Anmeldetag: 31.03.1999
(51) Int. Cl.: C02F 3/30, C02F 1/28, C02F 3/12

(54) **Verfahren zur Reinigung von Phenole enthaltendem Abwasser**
A method of purifying waste water containing phenolics
Procédé pour la purification d'eaux usées contenant des phénols

(43) Veröffentlichungstag der Anmeldung: 04.10.2000
(73) Patentinhaber: Argus Umweltbiotechnologie GmbH, 10553 Berlin (DE)
(72) Erfinder: Niebelschütz, Horst, Dr.-Ing., 12101 Berlin (DE); Liedecke, Heidrun, Dipl.-Ing., 12108 Berlin (DE)
(74) Vertreter: Wablat, Wolfgang, Dr.Dr.

(56) Entgegenhaltungen:
- EP-A- 0 349 708
- WO-A-87/05592
- WO-A-97/47561
- LU-A- 81 801

## Beschreibung

Die Erfindung betrifft ein Verfahren zur Reinigung von bei der Herstellung von Olivenöl in den jeweils angewendeten Produktionsprozessen mit unterschiedlichem Wasseranteil bzw. Gehalt an organischen Stoffen anfallendem Abwasser.

Der biologischen Reinigung von Abwasser sind Grenzen gesetzt, sofern es, wie zum Beispiel das bei der Olivenölproduktion anfallenden Abwasser, antibakteriell wirkende Bestandteile enthält.

Bei der Herstellung von Olivenöl nach dem dreiphasigen Prozess fällt mit dessen ständig steigender Produktion in zunehmendem Maße ein mit organischen Stoffen hoch belastetes Abwasser, das sogenannte Alpechin oder - bei einem zweiphasigen Prozess mit verringertem Wasserverbrauch - das sogenannte Alpeorujo mit geringerem Wasseranteil, an, dessen Entsorgung mit erheblichen Problemen verbunden ist. (Alpechin und Alpeorujo sind die spanischen Bezeichnungen. Die entsprechenden Bezeichnungen lauten im Griechischen katsigaros bzw. imirefsti pirinia und im Italienischen acque di vegetazione delle olive.) Nach der früher üblichen Einleitung in Gewässer, die deren wesentliche Verunreinigung oder gar das Umkippen des ökologischen Gleichgewichts zur Folge hatte, besteht eine gegenwärtig verbreitet angewendete Entsorgungspraxis in der Verrieselung auf Land, die jedoch mit einer Verunreinigung der Böden und insbesondere des Grundwassers verbunden ist. Die daher vielfach praktizierte Ablagerung des Alpechins bzw. Alpeorujos in Evaporationsbecken, bei der ein Eindringen in das Grundwasser beispielsweise durch eine Folienauskleidung verhindert wird, ist wegen des großen Platzbedarfs, der durch die aufgrund der zurückbleibenden Feststoffe erforderlichen ständigen Neuanlegung von Verdunstungsbecken bedingt ist, ebenfalls nachteilig. Die weiteren bekannten Verfahren zur Reinigung derartiger Abwässer mittels physikalisch-chemischer Methoden, durch Ultrafiltration, reverse Osmose, thermische Konzentration, Gefriertrennung oder Elektrodialyse haben sich aufgrund hoher Betriebs- und Installationskosten als unwirtschaftlich erwiesen.

In Anbetracht der im Abwasser der Olivenölproduktion enthaltenen organischen Verbindungen, wie Kohlenhydrate, Proteine, organische Säuren, Polyalkohole, Polyphenole und Fette, bietet sich zwar eine biologische Reinigung an, der jedoch die Anwesenheit von antibakteriell wirkenden Substanzen im Abwasser, z.B. Benzoesäurederivate und andere Polyphenole, entgegensteht. Die im Alpechin und im Alpeorujo enthaltenen Benzoesäurederivate, phenolischen Säuren und Polyphenole mit ihrer das Wachstum der Mikroorganismen inhibierenden Wirkung verhindern eine effektive biologische Reinigung unter aeroben und anaeroben Bedingungen. Aus diesen Gründen ist eine technische Realisierung einer biologischen Behandlung des bei der Olivenölproduktion anfallenden Wassers bisher weitestgehend unterblieben.

Der Erfindung liegt daher die Aufgabe zugrunde, ein Verfahren zur Reinigung von bei der Olivenöl-produktion anfallendem Abwasser anzugeben, das unter wirtschaftlichen Gesichtspunkten eine im Wesentlichen vollständige Entfernung der organischen Bestandteile gewährleistet, so dass ein gereinigtes, von Farb- und Geruchsstoffen freies Abwasser für Bewässerungszwecke oder zur Wiederverwendung in der Produktion zur Verfügung steht oder in Gewässer geleitet werden kann.

Erfindungsgemäß wird die Aufgabe mit einem Verfahren gelöst, bei dem einer biologischen Behandlung des Abwassers mit Mikroorganismen ein erster Verfahrensschritt zur mechanischen Abtrennung der im Abwasser vorhandenen Feststoffe und Ölbestandteile und anschließend ein physikalischer zweiter Verfahrensschritt zur selektiven Adsorption der phenolischen Komponenten des Abwassers in einem Ionenaustauschprozess an einem Adsorberharz vorgeschaltet ist.

Mit diesem Verfahren gelingt es zum ersten Mal, das bei der Olivenölproduktion anfallende, mit organischen Stoffen hochbelastete Abwasser kostengünstig und effektiv biologisch so zu reinigen, dass es bedenkenlos für die Olivenölproduktion oder zur Bewässerung verwendet oder in Gewässer abgeleitet werden kann.

Der Grundgedanke der Erfindung zur Erzielung einer umweltentlastenden effektiven Reinigung besteht in der Entfernung der phenolischen Bestandteile des Abwassers durch deren Adsorption an einem speziellen Adsorberharz in einem Ionenaustauschprozess und des erst im Anschluss daran durchgeführten biologischen Abbaus der restlichen organischen Stoffe mit Hilfe von Mikroorganismen, bei dem die zuvor entfernten phenolischen Komponenten einer biologischen Behandlung nicht mehr entgegenstehen. Wichtig ist, dass dem Adsorptionsschritt die Entfernung der festen Bestandteile und des Öles im Abwasser vorangestellt ist, um die Funktionsfähigkeit des Adsorbers zu gewährleisten indem beispielsweise ein Verstopfen der Adsorptionsmittelschicht mit Feststoffen verhindert wird. Erst durch die Kombination aus den Schritten Separation der Feststoffe, Adsorption der phenolischen Stoffe und biologische Behandlung der anderen organischen Stoffe im Abwasser, und zwar in der genannten Reihenfolge, gelingt eine im wesentlichen vollständige Reinigung des beispielsweise in Form von Alpechin oder Alpeorujo vorliegenden Abwassers.

Weitere Merkmale und vorteilhafte Weiterbildungen der Erfindung ergeben sich aus den Unteransprüchen und der weiter unten wiedergegebenen Beschreibung einer bevorzugten Ausführungsform der Erfindung.

Gemäß einem derartigen, in den Unteransprüchen aufgezeigten Merkmal wird die biologische Reinigung zunächst in einem anaeroben Prozess und anschließend in einem aeroben Prozess durchgeführt, wobei in dem anaeroben Prozess neben dem Abbau der niedermolekularen organischen Stoffe gleichzeitig eine Aktivierung der hochmolekularen organischen Stoffe für deren biologischen Abbau in dem nachfolgenden aeroben Schritt erfolgt. Um die nach der aeroben Reinigungsstufe verbleibende bräunliche Färbung des Abwassers zu beseitigen, wird dieses in einem letzten Verfahrensschritt einem Fällungs-/Flockungs- oder einem Adsorptions- oder insbesondere einem Nanofiltrationsprozess unterworfen, bevor es einer Weiterverwendung zugeführt oder in Gewässer abgeleitet wird.

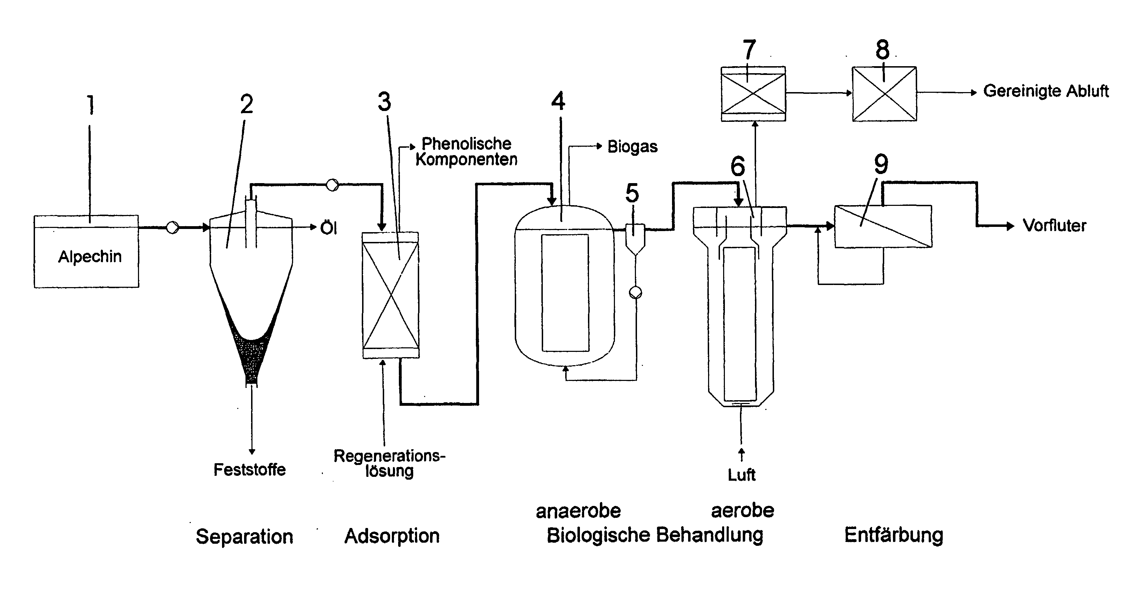

Ein Ausführungsbeispiel der Erfindung wird anhand der Zeichnung, in dessen einziger Figur eine Vorrichtung zur Durchführung des Verfahrens zur Reinigung von Abwasser aus der Olivenölproduktion am Beispiel des bei dem dreiphasigen Herstellungsprozess anfallenden Alpechins entsprechend den einzelnen Verfahrensschritten schematisch dargestellt ist, näher erläutert.

In einem ersten Verfahrensschritt werden aus dem aus einem das Alpechin aufnehmenden Behälter 1 abfließenden Abwasserstrom mit Hilfe einer Trennvorrichtung, hier einem Hydrozyklon 2, das in dem Abwasser verbliebene Öl sowie die festen Bestandteile abgetrennt. Bei der Reinigung des in dem zweiphasigen Herstellungsverfahren anfallenden Alpeorujo mit einem deutlich geringerem Wasseranteil wird in dem ersten Verfahrensschritt, der Trennstufe, eine Filterpresse (nicht dargestellt) verwendet. Anstelle des Hydrozyklons 1 können auch andere Trennvorrichtungen, z.B. eine Filterzentrifuge mit daran anschließendem Vakuumfilter, eingesetzt werden. In diesem ersten Verfahrensschritt wird der Anteil an festen Bestandteilen im Abwasser auf weniger als 0,1 % gesenkt.

In der nachfolgenden Adsorptionsstufe wird das von Feststoffen und Restöl befreite Abwasser über einen mit schwach basischem Anionenaustauscherharz (Adsorberharz) gefüllten Adsorber 3 geleitet. In diesem physikalischen Verfahrensschritt werden die inhibierend wirkenden phenolischen Komponenten des Abwassers in einem Ionenaustausch-Prozess an der Oberfläche der kugelförmigen Partikel aus Adsorberharz adsorbiert und dadurch in einem Anteil von mehr als 95 % aus dem zu reinigendem Abwasser entfernt. Die vorangegangene Abtrennung der festen Bestandteile aus dem Abwasser verhindert ein vorzeitiges Verstopfen der Zwischenräume zwischen den Adsorberharzpartikeln. Gleichzeitig werden durch die Ölabscheidung im Hydrozyklon 2 negative Auswirkungen des im Abwasser vorhandenen Restöls auf das Adsorptionsvermögen des Adsorberharzes vermieden. Wenn die maximale Beladungskapazität des Adsorberharzes erreicht ist, wird es, nachdem zuvor die Abwasserzufuhr unterbrochen wurde, durch Überleitung einer Regenerationslösung - im vorliegenden Ausführungsbeispiel einer 4-%igen Natronlauge - regeneriert.

Nach der Abtrennung der Benzoesäurederivate und anderer phenolischer Komponenten, die eine den biologischen Abbau der anderen organischen Bestandteile durch die Mikroorganismen verhindernde Wirkung haben, wird das Abwasser weiter zunächst in einer anaeroben und anschließend in einer aeroben Fermentationsstufe biologisch gereinigt, und zwar ohne dass das Wachstum der Mikroorganismen durch die phenolischen Komponenten behindert werden kann. In dem anaeroben Bioreaktor 4 werden unter Sauerstoffausschluss zunächst die niedermolekularen organischen Stoffe, wie organische Säuren, Fette, Zucker und dergleichen, durch Stoffwechselprozesse abgebaut. Dabei entsteht Biogas, das zur Energiegewinnung genutzt werden kann. Außerdem werden in dem anaeroben Bioreaktor 4 die im Abwasser vorhandenen hochmolekularen Stoffe für den biologischen Abbau in dem nachfolgenden aeroben Bioreaktor 6 aktiviert. Der Abwasserstrom wird nach dem Verlassen des Bioreaktors 4 über einen Sedimenter 5 geführt, in dem sich die im Abwasserstrom mitgeführte Biomasse aus dem anaeroben Bioreaktor 4 absetzt, um in den anaeroben Bioreaktor 4 zurückgeführt zu werden und dadurch in dem kontinuierlichen Prozess Biomasseverluste zu vermeiden.

Das Abwasser gelangt anschließend in einen aeroben Bioreaktor 6, in dem die hochmolekularen organischen Stoffe unter Luftzufuhr biologisch abgebaut werden. Die dabei entstehende Abluft wird in einem Biofilter 7 und einem Aktivkohlefilter 8 gereinigt und von Geruchsstoffen befreit und danach ins Freie geleitet. Auf die aerobe Fermentationsstufe folgt schließlich eine Entfärbungsstufe, in der die verbliebenen organischen Bestandteile im Wesentlichen entfernt werden und die bis dahin noch bräunliche Flüssigkeit entfärbt wird. Die Klärungsstufe wird durch einen Nanofiltrationsmodul 9 gebildet, durch das die makromolekularen organischen Farbstoffe in einem Feinfilter zurückgehalten werden, so dass klares, im Wesentlichen von organischen Stoffen freies Wasser in einen anschließenden Vorfluter gelangt.

Das oben beschriebene Verfahren zeichnet sich durch eine hohe Reinigungswirkung aus. Während in den ersten beiden Verfahrensschritten etwa 99,9 % der Feststoffe bzw. mehr als 95 % der inhibierend wirkenden phenolischen Komponenten abgetrennt werden, ist die Biomasse in dem gereinigten Abwasser vollständig entfernt. Der chemische Sauerstoffbedarf kann auf weniger als 500 mg/L reduziert werden. Zudem werden pro Kubikmeter zu reinigendem Abwasser etwa 15 m³ Biogas zur Energieerzeugung bereitgestellt.

Die Erfindung ist nicht auf das oben beschriebene Ausführungsbeispiel beschränkt. Im Rahmen der Erfindung, deren Grundgedanke in der einer biologischen Abwasserbehandlung vorgeschalteten Separation von Feststoffen und Öl sowie einer Adsorption phenolischer Komponenten an einem Adsorberharz besteht, sind - auch in Abhängigkeit von den Bedingungen bei der Olivenölproduktion und dem dabei entstehenden Abwasser - verschiedene Modifikationen hinsichtlich der konkreten apparativen Ausbildung in den einzelnen Verfahrensstufen möglich.

### Bezugszeichenliste

- 1: Behälter für Alpechin
- 2: Hydrozyklon
- 3: Adsorber
- 4: anaerober Bioreaktor
- 5: Sedimenter
- 6: aerober Bioreaktor
- 7: Biofilter
- 8: Aktivkohlefilter
- 9: Nanofiltrationsmodul

## Patentansprüche

1. Verfahren zur Reinigung von bei der Olivenöl-produktion mit unterschiedlichem Wasseranteil und Gehalt an organischen Stoffen anfallendem Abwasser, das antibakteriell wirkende, einer biologischen Abwasserreinigung entgegenstehende phenolische Komponenten enthält, **dadurch gekennzeichnet, dass** vor der biologischen Behandlung eine selektive Adsorption der phenolischen Komponenten durch Ionenaustausch an einem Adsorberharz durchgeführt wird, der zur Gewährleistung des vollen Adsorptionsvermögens eine mechanische Abtrennung der im Abwasser vorhandenen Öl- und Feststoffanteile vorgeschaltet ist.

2. Verfahren nach Anspruch 1, **dadurch gekennzeichnet, dass** die biologische Behandlung des von phenolischen Komponenten freien Abwassers zunächst in einer anaeroben Fermentation zum Abbau der niedermolekularen organischen Stoffe und anschließend in einer aeroben Fermentation zur Entfernung der hochmolekularen organischen Bestandteile des Abwassers durchgeführt wird.

3. Verfahren nach Anspruch 1 und 2, **dadurch gekennzeichnet, dass** sich an die biologische Behandlung ein Verfahrensschritt zur mechanischen oder chemischen oder physikalischen Abtrennung der im Abwasser verbliebenen, eine bräunliche Färbung bewirkenden makromolekularen organischen Stoffe anschließt.

4. Verfahren nach Anspruch 1, **dadurch gekennzeichnet, dass** das Adsorberharz zur Abführung der an diesem adsorbierten phenolischen Komponenten diskontinuierlich mit einer Regenerationslösung regeneriert wird.

5. Verfahren nach Anspruch 2, **dadurch gekennzeichnet, dass** ein bei der anaeroben Fermentation gewonnenes Biogas zur Energiegewinnung genutzt wird.

6. Verfahren nach Anspruch 2, **dadurch gekennzeichnet, dass** die Biomasse für die anaerobe und aerobe Fermentation intern im Reaktor zurückgehalten wird oder extern aus dem Abwasserstrom abgetrennt und dem Fermentationsprozess wieder zugeführt wird.

7. Verfahren nach Anspruch 2, **dadurch gekennzeichnet, dass** die bei der aeroben Reaktion anfallende Abluft zur geruchlosen Abgabe ins Freie biologisch und physikalisch gefiltert wird.

8. Verfahren nach Anspruch 3, **dadurch gekennzeichnet, dass** die Abtrennung der die Färbung des Abwassers bewirkenden restlichen organischen Stoffe durch Nanofiltration, Flockung/Fällung, Adsorption oder oxidative Methoden sowohl chemisch als auch photokatalytisch induziert erfolgt.

9. Verfahren nach Anspruch 1, **dadurch gekennzeichnet, dass** das Adsorberharz ein schwach basisches Anionenaustauscherharz ist.

10. Abwasserreinigungsanlage zur Durchführung des Verfahrens nach einem der Ansprüche 1 bis 9, **gekennzeichnet durch** eine Trennvorrichtung (2) zum Abtrennen von Feststoffen und Öl aus dem Abwasser einen diskontinuierlich an ein Regenerierungsmittel anschließbaren, mit einer Adsorberharzschichtung gefüllten Adsorber (3) zur Entfernung der phenolischen Komponenten aus dem Abwasser, einen dem Abbau der niedermolekularen organischen Stoffe dienenden anaeroben Bioreaktor (4), einen dem Abbau der hochmolekularen organischen Stoffe dienenden aeroben Bioreaktor (6) mit in einer an diesen angeschlossenen Abluftleitung eingebundenen Biofilter (7) und Aktivkohlefilter (8) zur Vermeidung von Geruchsbelästigungen **durch** die Abluft, Mittel zum internen Zurückhalten der Biomasse im Bioreaktor (4,6) und/oder zur Abtrennung mitgerissener Biomasse aus dem Abwasserstrom und Rückführung in den Bioreaktor (4,6) sowie ein Filtrationsmodul (9) zur Abtrennung der in dem Abwasser verbliebenen farbgebenden organischen Stoffe.

11. Abwasserreinigungsanlage nach Anspruch 10, **dadurch gekennzeichnet, dass** als Trennvorrichtung (2) zur Separation der Feststoffe eine Teller- oder Filterzentrifuge und/oder ein Vakuumrotationsfilter vorgesehen ist.

12. Abwasserreinigungsanlage nach Anspruch 10, **dadurch gekennzeichnet, dass** das Zurückhalten der Biomasse im Bioreaktor mit Hilfe eines nachgeschalteten Sedimenters (5) mit Rückführungsleitung oder durch ein Festbett- oder Wirbelschichtreaktor in Form trägerfixierter Biomasse erfolgt.

## Claims

1. Method of purifying wastewater occurring with varying water and organic substance contents during the production of olive oil and containing anti-bacterially acting phenolic components which impede biological wastewater purification, **characterised in that** before the biological treatment the phenolic components are selectively adsorbed by ion exchange on an adsorber resin preceded by mechanical separation of the oil and solid contents present in the wastewater to guarantee the full absorption capacity.

2. Method according to claim 1, **characterised in that** the biological treatment of the wastewater free of phenolic components is initially carried out in an anaerobic fermentation to breakdown the low molecular weight organic substances, and subsequently in an aerobic fermentation to remove the high molecular weight organic components of the wastewater.

3. Method according to claim 1 and 2, **characterised in that** a process step for mechanical or chemical or physical separation of the macromolecular organic substances causing a brownish discoloration follows the biological treatment.

4. Method according to claim 1, **characterised in that** the adsorber resin for removing the phenolic components adsorbed thereon is discontinuously regenerated by a regeneration solution.

5. Method according to claim 2, **characterised in that** a biogas obtained during the anaerobic fermentation is used to obtain energy.

6. Method according to claim 2, **characterised in that** the biomass is retained internally in the reactor for the anaerobic and aerobic fermentation or is separated externally from the wastewater flow and recycled to the fermentation process.

7. Method according to claim 2, **characterised in that** the exhaust air which occurs during the aerobic reaction is biologically and physically filtered for odour-free release to the open air.

8. Method according to claim 3, **characterised in that** separation of the residual organic substances causing the discoloration of the wastewater is induced both chemically and photocatalytically by nanofiltration, flocculation/precipitation, absorption or oxidative methods.

9. Method according to claim 1, **characterised in that** the adsorber resin is a weak basic anion-exchange resin.

10. Wastewater purification plant for carrying out the method according to any of claims 1 to 9, **characterised by** a separating device (2) for separating solids and oil from the wastewater, a discontinuous adsorber (3) connectable to a regenerating means and filled with an adsorber resin lamination for removing the phenolic components from the wastewater, an anaerobic bioreactor (4) serving to break down the low molecular weight organic substances, an aerobic bioreactor (6) serving to break down the high molecular weight organic substances with biofilters (7) incorporated in an exhaust air line connected thereto and activated carbon filters (8) for avoiding odour nuisances owing to the exhaust air, means for internal retention of the biomass in the bioreactor (4, 6) and/or for separation of entrained biomass from the wastewater flow and return into the bioreactor (4, 6) and a filtration module (9) for separating the colour-inducing organic substances remaining in the wastewater.

11. Wastewater purification plant according to claim 10, **characterised in that** a disc or filtering centrifuge and/or a rotary vacuum filter is provided as separating device (2) for separating the solids.

12. Wastewater purification plant according to claim 10, **characterised in that** the biomass is retained in the bioreactor with the aid of a sedimenter (5) connected downstream with return line or by a fixed bed or fluidised bed reactor in the form of support-fixed biomass.

## Revendications

1. Procédé pour la purification d'eaux usées produites lors de la fabrication d'huile d'olive avec différentes proportions en eau et teneur en matières organiques, qui contiennent des composants phénoliques s'opposant à une purification biologique des eaux usées, **caractérisé en ce qu'**avant le traitement biologique on effectue une adsorption sélective des composants phénoliques par échange ionique sur une résine adsorbante, absorption qui, pour garantir la pleine capacité d'adsorption est précédée d'une séparation mécanique des quantités de matières solides et d'huile présentes dans les eaux usées.

2. Procédé selon la revendication 1, **caractérisé en ce que** le traitement biologique des eaux usées exemptes des composants phénoliques s'effectue dans un premier temps dans une fermentation anaérobie pour la décomposition des matières organiques à faible poids moléculaire et ensuite dans une fermentation aérobie pour l'élimination des composants organiques à poids moléculaire élevé des eaux usées.

3. Procédé selon la revendication 1 et 2, **caractérisé en ce que** le traitement biologique est accompagné d'une étape de procédé pour la séparation mécanique ou chimique ou physique des matières organiques macromoléculaires restant dans les eaux usées et produisant une coloration brunâtre.

4. Procédé selon la revendication 1, **caractérisé en ce que** la résine adsorbante est régénérée de façon discontinue avec une solution de régénération pour l'évacuation des composants phénoliques adsorbés sur celle-ci.

5. Procédé selon la revendication 2, **caractérisé en ce que** pour la récupération d'énergie on utilise un biogaz obtenu lors de la fermentation anaérobie.

6. Procédé selon la revendication 2, **caractérisé en ce que** la biomasse pour la fermentation anaérobie et aérobie est retenue à l'intérieur du réacteur ou est séparée à l'extérieur du courant des eaux usées et est recyclée dans le procédé de fermentation.

7. Procédé selon la revendication 2, **caractérisé en ce que** l'air d'évacuation produit lors de la réaction aérobie est filtré biologiquement et physiquement pour la délivrance inodore à l'air libre.

8. Procédé selon la revendication 3, **caractérisé en ce que** la séparation des matières organiques restantes produisant la coloration des eaux usées s'effectue par nanofiltration, floculation / précipitation, adsorption ou des méthodes d'oxydation aussi bien chimiquement que photocatalytiquement de façon induite.

9. Procédé selon la revendication 1, **caractérisé en ce que** la résine adsorbante est une résine échangeuse d'anions faiblement basique.

10. Installation de purification des eaux usées pour la réalisation du procédé selon l'une des revendications 1 à 9, **caractérisée par** un dispositif de séparation (2) pour la séparation des matières solides et l'huile des eaux usées, un adsorbeur (3) rempli d'une couche de résine adsorbante raccordable de façon discontinue à un moyen de régénération pour la séparation des composants phénoliques des eaux usées, un bioréacteur anaérobie (4) servant pour la décomposition des matières organiques à faible poids moléculaire, un bidréacteur aérobie (6) servant pour la décomposition des matières organiques à poids moléculaire élevé, avec un biofiltre (7) et un filtre au charbon actif (8) incorporé dans une conduite d'évacuation d'air raccordé à ce bioréacteur aérobie pour empêcher les mauvaises odeurs liées à l'évacuation d'air, des moyens pour la retenue interne de la biomasse dans le bioréacteur (4,6) et/ou pour la séparation de la biomasse entraînée du courant des eaux usées et le retour dans le bioréacteur (4,6) ainsi qu'un module de filtration (9) pour la séparation des matières organiques colorantes restant dans les eaux usées.

11. Installation de purification des eaux usées selon la revendication 10, **caractérisée en ce qu'**en tant que dispositif de séparation (2) pour la séparation des matières solides, il est prévu une centrifugeuse à plateau ou à filtre et/ou un filtre rotatif sous vide.

12. Installation de purification des eaux usées selon la revendication 10, **caractérisée en ce que** la retenue de la biomasse dans le bioréacteur s'effectue à l'aide d'un appareil de sédimentation (5) placé en aval avec une conduite de retour ou par un réacteur à lit fluidisé ou à lit fixe sous forme de biomasse fixée sur support.
